(19) **Europäisches Patentamt**
**European Patent Office**
**Office européen des brevets**

(11) **EP 1 932 154 B1**

(12) **EUROPEAN PATENT SPECIFICATION**

(45) Date of publication and mention
of the grant of the patent:
**14.04.2010 Bulletin 2010/15**

(51) Int Cl.:
***G11B 27/10*** *(2006.01)*    ***G06F 17/30*** *(2006.01)*

(21) Application number: **06795862.9**

(86) International application number:
**PCT/IB2006/053057**

(22) Date of filing: **01.09.2006**

(87) International publication number:
**WO 2007/036817 (05.04.2007 Gazette 2007/14)**

(54) **METHOD AND APPARATUS FOR AUTOMATICALLY GENERATING A PLAYLIST BY SEGMENTAL FEATURE COMPARISON**

VERFAHREN UND VORRICHTUNG ZUM AUTOMATISCHEN ERSTELLUNG EINER ABSPIELLISTE DURCH SEGMENTWEISEN MERKMALSVERGLEICH

PROCEDE ET APPAREIL DE GENERATION AUTOMATIQUE D'UNE LISTE DE DIFFUSION PAR COMPARAISON SEGMENTAIRE DE CARACTERISTIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.09.2005 EP 05109015**

(43) Date of publication of application:
**18.06.2008 Bulletin 2008/25**

(73) Proprietor: **Koninklijke Philips Electronics N.V.**
**5621 BA Eindhoven (NL)**

(72) Inventors:
• **APREA, Javier, F.**
**NL-5656 AA Eindhoven (NL)**

• **LEMMA, Aweke, N.**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**WO-A2-01/20483**       **US-A- 5 918 223**
**US-A1- 2002 181 711**   **US-A1- 2003 045 954**
**US-A1- 2003 183 064**

Printed by Jouve, 75001 PARIS (FR)

EP 1 932 154 B1

## Description

FIELD OF THE INVENTION

The present invention relates to method and apparatus for automatically generating a playlist of content items, e.g. songs. In particular, it relates to automatic playlist generation of content items similar to a seed content item.

BACKGROUND OF THE INVENTION

Multimedia consumer devices are expanding in processing power and can provide users with more advanced multimedia content browsing, navigation and retrieval features. It is expected that due to the increase of storage capacities and connection bandwidths, consumers will have access to enormous databases of content items. Therefore, there is an increasing demand to provide effective browsing, navigation and retrieval systems to assist the user.

There are many known systems for the retrieval of content items and for automatic generation of playlists. Some of these systems operate on selecting content items from an extensive database on the basis of their similarity to a certain seed (or reference) content item. In such systems, all the content items stored in the database are pre-analysed and their representative features are stored in a metadata database. The user supplies a seed content item (which has a classification, associated therewith) and the system then retrieves similar content items by comparing the degree of similarity between the respective representative features (or similarity between the classifications of the respective content items). However, these known systems do not retrieve all content items which would be regarded by the user as similar to the seed content item.

US 5,918,223 discloses a system that performs analysis and comparison of audio data files based upon the content of the data files is presented. The analysis of the audio data produces a set of numeric values (a feature vector) that can be used to classify and rank the similarity between individual audio files typically stored in a multimedia database or on the World Wide Web. The analysis also facilitates the description of user-defined classes of audio files, based on an analysis of a set of audio files that are members of a user-defined class. The system can find sounds within a longer sound, allowing an audio recording to be automatically segmented into a series of shorter audio segments.

US2002/0181711 A1 discloses a computer method and apparatus for determining music similarity by generating a K-means (instead of Gaussian) cluster signature and a beat signature for each piece of music. The beat of the music is included in the subsequent distance measurement.

US 2003/0183064 A1 discloses a sequential playback system configured to select each sequential song based upon characteristics of an ending segment of each preceding song. Songs are selected based on the characteristics of the overall theme of the selection, if any, and also based on a musical correspondence between songs. The correspondence may be based on the rhythm of each song, the notes and chords of each song, and other musical characteristics of the songs. The end segment of each selected song is characterized, and the first segment of a candidate song that satisfy the overall selection criteria is compared to this characterization to determine a correspondence. If the first segment of the candidate song is inconsistent with the end segment of the previously selected song, another candidate song is found that satisfies the overall selection criteria, and the first segment of this new candidate song is compared to the characterization. This process continues until a suitable candidate song is identified, or until a time limit is exceeded. Transition pieces are optionally provided to facilitate a smooth transition between songs.

SUMMARY OF THE INVENTION

The present invention aims to provide a method that improves the perceived quality of the generated playlist.

This is achieved, according to an aspect of the present invention, by a method for automatically generating a playlist of candidate content items having features similar to features of a seed content item, the method comprising the steps of: comparing at least one feature of the seed content item with at least one feature of the candidate content items to identify specific ones of said candidate content items that are similar to the seed content item; and adding the identified candidate content items to the playlist, wherein the at least one feature of the seed content item and/or the at least one feature of the candidate content items comprises multiple features, the multiple features being representative of different parts of the seed content item and/or the candidate content items. The multiple features of the seed content item and/or of the candidate content items are compared with at least one feature of the seed content item or of the candidate content items by determining the distances between the features. During the playlist generation, the distance between the seed content item and any of the candidate content items is given by the smallest value of the distances determined for said seed content item-candidate content item pair.

This is also achieved, according to another aspect of the present invention, by an apparatus for automatically generating a playlist of candidate content items having features similar to features of a seed content item, wherein the seed content item and/or the candidate content items comprise multiple features, the multiple features being representative of different parts of the seed content item and/or the candidate content items, the generator comprising:

a comparator for comparing the multiple features of the seed content item and/or of the candidate content items with at least one feature of the seed content item or of the candidate content items by determining the distances between the features, to identify specific ones of said candidate content items that are similar to the seed content item; and
a compiler for adding the identified candidate content items to the playlist, characterized in that during the playlist generation, the distance between the seed content item and any of the candidate content items is given by the smallest value of the distances determined for said seed content item-candidate content item pair.

For example, a composite piece of audio content item may have three distinctive portions: classical, speech and pop. Using a known classifier, this would be classified strictly as one of classical, speech or pop. As a result, a generated playlist might only contain candidate songs of this one class and/or might only contain candidate songs whose *one class* is similar to the class of the seed song (e.g. a candidate song with a pop part may not be listed for a seed song of class pop if the candidate song also has a classical part and only this classical part is used to compare the two songs). To overcome this, according to an embodiment of the present invention, a record is kept of, in the case of the example above, features from each portion (three sets of features): one set extracted from the classical part, one set from the speech part and one set from the pop part and, in the database, the content is linked with the three sets of features. This means that, the classifier will classify such a song as classical, speech and pop. Consequently, if the content of the content item varies greatly, it will be represented by a greater number of feature vectors which will more accurately represent the characteristics of the content as opposed to the existing systems which would attempt to represent the characteristics with a single feature vector. This results in an improved playlist of similar content items.

The feature may be a single feature, e.g. a value representing tempo or a classification, or it may be a feature vector. The method may extract the feature from a content item or from a metadata tag or database entry associated with the content item.

In a preferred embodiment, each of the plurality of candidate content items and the seed content item are segmented into a plurality of frames; and at least one feature vector is extracted from each frame to provide the multiple feature vectors of the content item.

The segmentation provides a pre-processing step and the feature vector can be extracted using an existing classifier. Therefore, no modification of the classifier is required.

BRIEF DESCRIPTION OF DRAWINGS

For a more complete understanding of the present invention, reference is made, as example, to the following description taken in conjunction with the accompanying drawings, in which:

Fig. 1 illustrates steps of the method according to a first embodiment of the present invention;
Fig. 2 illustrates the steps of the method according to a second embodiment of the present invention; and
Fig. 3 graphically illustrates the distribution of the feature vectors extracted according to a third embodiment of the present invention.

DETAILED DESCRIPTION OF PREFERRED EMBODIMENTS

For the purposes of the describing the embodiments, only the extraction of feature vectors of the audio content of the content item will be described. However, it can be appreciated that the method could be applicable for the extraction of features of the remaining content of the content item. The content item may comprise a file of analog or digital multimedia contents, music tracks, songs and the like.

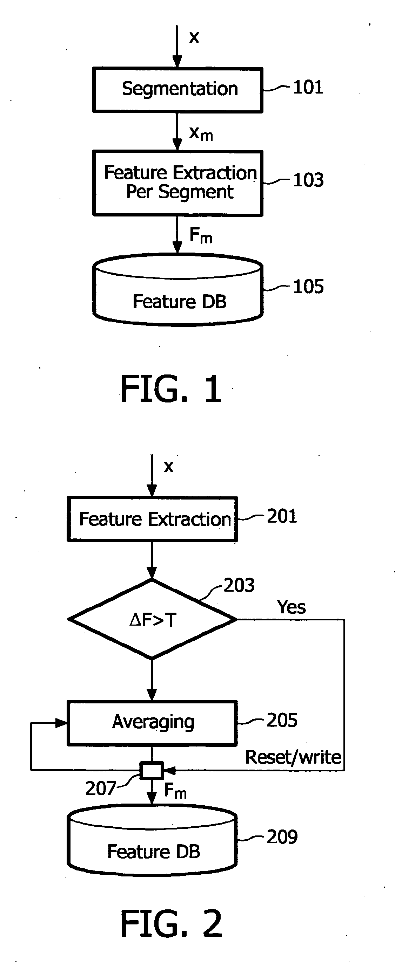

The method according to a first embodiment will now be described with reference to Figure 1. The incoming audio x is first segmented into frames $x_m$ of arbitrarily chosen length, step 101. The length of the frames may be of the same predetermined length or may be varied randomly. For each audio segment (or frame) $x_m$, a feature vector is extracted using known techniques, step 103 and stored in a feature database, step 105.

Let $M \geq 1$ be the number of segments in the candidate content item (song) and $K \geq 1$ be the number of segments in the seed content item (song). Moreover, let $F_{s,k}$ and $F_{j,m}$ be the feature vectors corresponding to the $k$-th and $m$-th segments of the seed and the candidate songs, respectively. Then during playlist generation the distance $D(F_s,F_j)$ between the segmented seed song (denoted by $s$) and the segmented candidate song (denoted by $j$) is given by

$$D\left(F_s,F_j\right) = \min_{\substack{m=1\ldots M \\ k=1\ldots K}} \left(F_{s,k} - F_{j,m}\right)$$

A number of candidate songs may be selected which meet predetermined distance criteria. These can be listed in the playlist in order of ascending distance, for example. The user can then select the top (say 30) matches to create the playlist. Alternatively, a maximum threshold for $D(F_s,F_j)$ can be predetermined and only those content items (songs) that have distances below the threshold are selected for the playlist.

In the second embodiment, segmentation is achieved by comparing the instantaneous change in feature vector. A simple schematic of this embodiment is shown in Figure 2. This is achieved by continuously averaging, step 205, the feature vector extracted in step 201 until the instantaneous change in feature statistics exceeds a certain threshold T, in step 203. Whenever this happens, a segmentation boundary is set the averaging buffer is reset 207 and the segment feature vector is written to the feature database, step 209. This procedure is repeated until the end of the song is reached. The advantage of this approach is that it provides a better trade-off between the number of features per song and representativeness of the features. The instantaneous change can be calculated in several ways. Some examples are instantaneous change are change in the local mean, drifting monitoring etc.

Again as described with reference to the first embodiment, a number of candidate songs may be selected which meet predetermined distance criteria to generate the playlist.

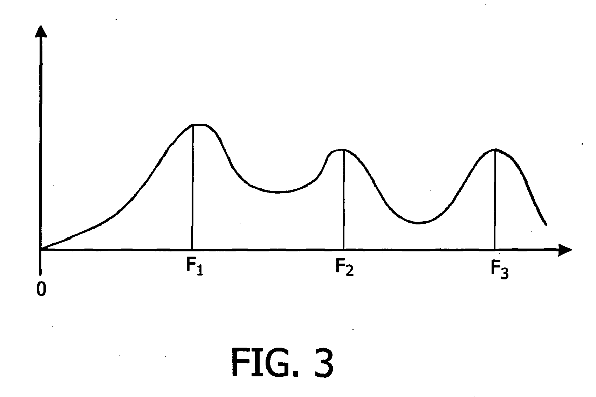

In a third embodiment, feature vectors are extracted and representative feature vectors are determined by analyzing the distribution of the vectors. A simple example of such a distribution is shown in Figure 3.

In this case, the features F1, F2 and F3 are taken as representative ones. In this way song segmentation is not required. The method according to this embodiment simply looks at the statistics and takes the local maxima as representative features. If there are several local maxima, multiple representative features are extracted. If there is only one maximum then the song will have only one representative feature.

Again as described with reference to the first embodiment, a number of candidate songs may be selected which meet predetermined distance criteria to generate the playlist. As a result, in this procedure randomization of playlist can be obtained by randomly choosing from the representative features. This way a more accurate (noise free) randomized playlist is achievable.

Although preferred embodiments of the present invention have been illustrated in the accompanying drawings and described in one foregoing detailed description, it will be understood that the invention is not limited to the embodiments disclosed, but is capable of numerous modifications without departing from the scope of the invention as set out in the following claims.

**Claims**

1. A method for automatically generating a playlist of candidate content items having features similar to features of a seed content item, wherein the seed content item and/or the candidate content items comprise multiple features, the multiple features being representative of different parts of the seed content item and/or the candidate content items, the method comprising the steps of:

   comparing the multiple features of the seed content item and/or of the candidate content items with at least one feature of the seed content item or of the candidate content items by determining the distances between the features, to identify specific ones of said candidate content items that are similar to the seed content item; and adding the identified candidate content items to the playlist, **characterized in that** during the playlist generation, the distance between the seed content item and any of the candidate content items is given by the smallest value of the distances determined for said seed content item-candidate content item pair, and the identified candidate content items to be added to the playlist comprise at least one candidate content item having the smallest distance.

2. A method according to claim 1, further comprising the steps of:

   segmenting each of the plurality of candidate content items and/or the seed content item into a plurality of frames (101); extracting at least one feature from each frame to provide the multiple features of the content item (102).

3. A method according to claim 2, wherein the frames are of a predetermined length.

4. A method according to claim 3, wherein each frame is of equal length.

5. A method according to claim 2, wherein the segmentation is on the basis of the content of the candidate content items and/or the seed content item.

6. A method according to claim 2, wherein the boundaries of said plurality of frames are determined by the instantaneous changes in the features of the said candidate content items and/or the seed content item.

7. An apparatus for automatically generating a playlist of candidate content items having features similar to features of a seed content item, wherein the seed content item and/or the candidate content items comprise multiple features, the multiple features being representative of different parts of the seed content item and/or the candidate content items, the generator comprising:

   a comparator for comparing the multiple features of the seed content item and/or of the candidate content items with at least one feature of the seed content item or of the candidate content items by determining the distances between the features, to identify specific ones of said candidate content items that are similar to the seed content item; and

a compiler for adding the identified candidate content items to the playlist, **characterized in that** during the playlist generation, the distance between the seed content item and any of the candidate content items is given by the smallest value of the distances determined for said seed content item-candidate content item pair, and the identified candidate content items to be added to the playlist comprise at least one candidate content item having the smallest distance.

8. A computer program product comprising a plurality of program code portions for carrying out the method according to any one of claims 1 to 6.

**Patentansprüche**

1. Verfahren zur automatischen Erstellung einer Abspielliste von Kandidateninhaltselemente, die Merkmale haben, die Merkmalen eines Keiminhaltselementes ähnlich sind, wobei das Keiminhaltselement und/oder die Kandidateninhaltselemente mehrere Merkmale aufweisen, wobei die mehreren Merkmale für verschiedene Teile des Keiminhaltselementes und/oder der Kandidateninhaltselemente repräsentativ sind, wobei das Verfahren die nachfolgenden Verfahrensschritte umfasst:

- das Vergleichen der mehreren Merkmale des Keiminhaltselementes und/oder der Kandidateninhaltselemente mit wenigstens einem Merkmal des Keiminhaltselementes oder der Kandidateninhaltselemente durch Ermittlung der Abstände zwischen den Merkmalen, und zwar zum Identifizieren bestimmter Elemente der genannten Kandidateninhaltselemente, die dem Keiminhaltselement ähnlich sind; und

- das Hinzufügen der identifizierten Kandidateninhaltselemente zu der Abspielliste, **dadurch gekennzeichnet, dass** während der Erzeugung der Abspielliste der Abstand zwischen dem Keiminhaltselement und irgendeinem der Kandidateninhaltselemente durch den kleinsten Wert der für das genannte Keiminhaltselement - Kandidateninhaltselementepaar bestimmten Abstände gegeben wird, und die zu der Abspielliste hinzuzufügenden identifizierten Kandidateninhaltselemente wenigstens ein Kandidateninhaltselement mit dem kleinsten Abstand enthalten.

2. Verfahren nach Anspruch 1, wobei dieses Verfahren weiterhin die nachfolgenden Verfahrensschritte umfasst:

- das Segmentieren jedes Elementes der vielen Kandidateninhaltselemente und/oder des Keiminhaltselementes in eine Vielzahl von Frames (101);

- das Extrahieren wenigstens eines Merkmals aus jedem Frame zum Schaffen der vielen Merkmale des Inhaltselementes (102).

3. Verfahren nach Anspruch 2, wobei die Frames eine vorbestimmte Länge haben.

4. Verfahren nach Anspruch 3, wobei jedes Frame die gleiche Länge hat.

5. Verfahren nach Anspruch 2, wobei die Segmentierung auf Basis des Inhalts der Kandidateninhaltselemente und/oder des Keiminhaltselementes erfolgt.

6. Verfahren nach Anspruch 2, wobei die Grenzen der genannten Vielzahl von Frames durch die augenblicklichen Änderungen in den Merkmalen der genannten Kandidateninhaltselemente und/oder des genannten Keiminhaltselements bestimmt werden.

7. Anordnung zur automatischen Erzeugung einer Abspielliste von Kandidateninhaltselementen, die Merkmale haben, die Merkmalen eines Keiminhaltselementes ähnlich sind, wobei das Keiminhaltselement und/oder die Kandidateninhaltselemente mehrere Merkmale aufweisen, wobei die mehreren Merkmale für verschiedene Teile des Keiminhaltselementes und/oder der Kandidateninhaltselemente repräsentativ sind, wobei die Erzeugungsanordnung Folgendes umfasst:

- eine Vergleichsanordnung zum Vergleichen der mehreren Merkmale des Keiminhaltselementes und/oder der Kandidateninhaltselemente mit wenigstens einem Merkmal des Keiminhaltselementes oder der Kandidateninhaltselemente durch Ermittlung der Abstände zwischen den Merkmalen, und zwar zum Identifizieren bestimmter Elemente der genannten Kandidateninhaltselemente, die dem Keiminhaltselement ähnlich sind; und

- einen Compiler zum Hinzufügen der identifizierten Kandidateninhaltselemente zu der Abspielliste, **dadurch gekennzeichnet, dass** während der Erzeugung der Abspielliste der Abstand zwischen dem Keiminhaltselement und irgendeinem der Kandidateninhaltselemente durch den kleinsten Wert der für das genannte Keiminhaltselement - Kandidateninhaltselementepaar bestimmten Abstände gegeben wird, und die zu der Abspielliste hinzuzufügenden identifizierten Kandidateninhaltselemente wenigstens ein Kandidateninhaltselement mit dem kleinsten Abstand enthalten.

8. Computerprogrammprodukt mit einer Vielzahl von Programmcodeteilen zum Durchführen des Verfahrens nach einem der Ansprüche 1 bis 6.

## Revendications

1. Procédé de génération automatique d'une liste de diffusion d'éléments de contenu candidats ayant des caractéristiques qui sont similaires à des caractéristiques d'un élément de contenu de semences, dans lequel l'élément de contenu de semences et/ou les éléments de contenu candidats comprennent des caractéristiques multiples, les caractéristiques multiples étant représentatives de parties différentes de l'élément de contenu de semences et/ou des éléments de contenu candidats, le procédé comprenant les étapes suivantes consistant à :

comparer les caractéristiques multiples de l'élément de contenu de semences et/ou des éléments de contenu candidats à au moins une caractéristique de l'élément de contenu de semences ou des éléments de contenu candidats en déterminant les distances comprises entre les caractéristiques, à identifier des éléments de contenu candidats spécifiques desdits éléments de contenu candidats qui sont similaires à l'élément de contenu de semences ; et
ajouter les éléments de contenu candidats identifiés à la liste de diffusion, **caractérisé en ce que**, pendant la génération de la liste de diffusion, la distance comprise entre l'élément de contenu de semences et l'un quelconque des éléments de contenu candidats est donnée par la plus petite valeur des distances qui sont déterminées pour ladite paire d'élément de contenu de semences et d'élément de contenu candidat, et **en ce que** les éléments de contenu candidats identifiés à ajouter à la liste de diffusion comprennent au moins un élément de contenu candidat ayant la plus petite distance.

2. Procédé selon la revendication 1, comprenant en outre les étapes suivantes consistant à :

segmenter chacun de la pluralité d'éléments de contenu candidats et/ou l'élément de contenu de semences en une pluralité de trames (101) ;
extraire au moins une caractéristique à partir de chaque trame pour fournir les caractéristiques multiples de l'élément de contenu (102).

3. Procédé selon la revendication 2, dans lequel les trames présentent une longueur prédéterminée.

4. Procédé selon la revendication 3, dans lequel chaque trame présente une longueur égale.

5. Procédé selon la revendication 2, dans lequel la segmentation est basée sur le contenu des éléments de contenu candidats et/ou sur l'élément de contenu de semences.

6. Procédé selon la revendication 2, dans lequel les limites de ladite pluralité de trames sont déterminées par les changements instantanés des caractéristiques desdits éléments de contenu candidats et/ou de l'élément de contenu de semences.

7. Appareil de génération automatique d'une liste de diffusion d'éléments de contenu candidats ayant des caractéristiques qui sont similaires à des caractéristiques d'un élément de contenu de semences, dans lequel l'élément de contenu de semences et/ou les éléments de contenu candidats comprennent des caractéristiques multiples, les caractéristiques multiples étant représentatives de parties différentes de l'élément de contenu de semences et/ou des éléments de contenu candidats, le générateur comprenant :

un comparateur pour comparer les caractéristiques multiples de l'élément de contenu de semences et/ou des éléments de contenu candidats à au moins une caractéristique de l'élément de contenu de semences ou des éléments de contenu candidats en déterminant les distances comprises entre les caractéristiques, à identifier des éléments de contenu candidats spécifiques desdits éléments de contenu candidats qui sont similaires à l'élément de contenu de semences ; et
un compilateur pour ajouter les éléments de contenu candidats identifiés à la liste de diffusion, **caractérisé en ce que**, pendant la génération de la liste de diffusion, la distance comprise entre l'élément de contenu de semences et l'un quelconque des éléments de contenu candidats est donnée par la plus petite valeur des distances qui sont déterminées pour ladite paire d'élément de contenu de semences et d'élément de contenu candidat, et **en ce que** les éléments de contenu candidats identifiés à ajouter à la liste de diffusion comprennent au moins un élément de contenu candidat ayant la plus petite distance.

8. Produit de programme informatique comprenant une pluralité de parties de code de programme pour la mise en oeuvre du procédé selon l'une quelconque des revendications précédentes 1 à 6.

x

Segmentation ——101

$x_m$

Feature Extraction
Per Segment ——103

$F_m$

Feature DB ——105

# FIG. 1

x

Feature Extraction ——201

$\Delta F > T$ ——203     Yes

Averaging ——205

Reset/write

207     $F_m$

Feature DB ——209

# FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5918223 A
- US 20020181711 A1
- US 20030183064 A1